# EUROPÄISCHE PATENTSCHRIFT

(11) **EP 1 923 577 B1**
(45) Veröffentlichungstag und Bekanntmachung des Hinweises auf die Patenterteilung: **03.06.2009**
(21) Anmeldenummer: 06023942.3
(22) Anmeldetag: 17.11.2006
(51) Int. Cl.: F16B 5/00

(54) **Mehrteiliges Bauteil, insbesondere mehrteiliger Hitzeschild**
Multipart construction unit, in particular multipart heat shield
Élément comportant plusieurs parties, en particulier écran thermique comportant plusieurs parties

(43) Veröffentlichungstag der Anmeldung: 21.05.2008
(73) Patentinhaber: REINZ-Dichtungs-GmbH, 89233 Neu-Ulm (DE)
(72) Erfinder: Reiss, Jutta, 72535 Heroldstatt (DE); Wuchenauer, Martin, 89275 Elchingen (DE)
(74) Vertreter: Tomerius, Isabel

(56) Entgegenhaltungen:
- EP-A1- 0 278 998
- EP-A1- 0 786 294
- WO-A-02/18801
- CH-A- 329 133

## Beschreibung

Die Erfindung betrifft ein mehrteiliges Bauteil, gemäß dem ersten Teil des Anspruchs 1 (EP 0278 998), in dem wenigstens eines der Teilstücke ein flächiges Abschirmteil zum Abschirmen eines Gegenstandes gegen Temperatur und/oder Schall ist. Derartige flächige Abschirmteile werden üblicherweise als Hitzeschilde bezeichnet und beispielsweise in Motorräumen von Kraftfahrzeugen eingesetzt, unter anderem im Bereich der Abgasanlage, um benachbarte temperaturempfindliche Bauteile und Aggregate gegenüber unzulässiger Erhitzung zu schützen. Gleichzeitig dienen diese Hitzeschilde dabei häufig als Schallschutz. Konkret können solche Hitzeschilde beispielsweise zum Abschirmen eines Katalysators oder Vorkatalysators, eines Partikelfilters oder sonstiger Komponenten im Bereich des Abgasstrangs oder eines Turboladers eingesetzt werden.

Um Platz zu sparen, werden die in Motorräumen verbauten Komponenten oft sehr stark ineinander verschachtelt. Für die Hitzeschilde steht deshalb häufig nur sehr wenig Platz zur Verfügung, und sie müssen oft sehr stark dreidimensional verformt werden, damit sie der Kontur der abzuschirmenden Komponente möglichst eng folgen. Die daraus resultierende sehr komplexe dreidimensionale Gestaltung vieler Hitzeschilder führt zu Problemen bei deren Herstellung. Wenn möglich, werden Hitzeschilde aus einer zunächst planen Lagenstruktur mittels eines geeigneten Prägewerkzeugs in die gewünschte dreidimensionale Form geprägt. Bei sehr stark dreidimensional verformten Strukturen ist dies jedoch im Allgemeinen nicht mehr möglich, weil sich beispielsweise durch zu starke Verformung Risse in der Lagenstruktur bilden würden. Hitzeschilde mit sehr stark ausgeprägten Vor- und Rücksprüngen oder Hinterschneidungen lassen sich ohnehin nicht mehr einteilig mit einem Prägewerkzeug herstellen, da hier eine Entformung nicht mehr möglich ist. Aus diesem Grund werden sehr stark dreidimensional verformte Hitzeschilde in der Regel aus mehreren Teilstücken, die jeweils gesondert gefertigt werden, zusammengesetzt.

Für das Zusammensetzen der Teilstücke eines mehrteiligen Hitzeschildes sind im Stand der Technik verschiedene Möglichkeiten bekannt. Beispielsweise werden die Teilstücke so gefertigt, dass sie im Bereich einer Verschraubung überlappen, und dadurch miteinander verbunden, dass sie in diesem Überlappungsbereich gemeinsam festgeschraubt werden. Es ist außerdem bekannt, zwei Teilstücke eines Hitzeschildes mittels eines Scharniers miteinander zu verbinden. Üblich ist es weiterhin, Teilstücke eines Hitzeschildes durch Klammern aneinander zu befestigen. Ein Beispiel hierfür ist in der DE 102004030622 A1 beschrieben.

Nachteilig an diesen Möglichkeiten ist jedoch, dass die Verbindung der Teilstücke der Hitzeschilde relativ aufwändig ist und häufig zusätzliche Verbindungselemente wie Scharniere oder Verbindungsklammern benötigt werden. Im Falle einer gemeinsamen Verschraubung von Teilstücken eines Hitzeschildes müssen die Einzelteile so lange gesondert gehandhabt und einzeln um den abzuschirmenden Gegenstand herum platziert werden, bis sie durch gemeinsame Verschraubung zum fertigen Hitzeschild miteinander verbunden werden. Diese Befestigung der Einzelteile eines Hitzeschildes ist jedoch umständlicher und komplizierter als das Befestigen eines bereits zusammengesetzten Hitzeschildes.

Aufgabe der Erfindung ist es entsprechend, ein mehrteiliges Bauteil anzugeben, in dem wenigstens eines der Teilstücke ein flächiges Abschirmteil zum Abschirmen eines Gegenstandes gegen Temperatur und/oder Schall ist, das auf einfache Weise bereits vor dem oder beim Befestigen im Bereich des abzuschirmenden Gegenstandes und möglichst ohne Verwendung separater Verbindungselemente zusammengesetzt werden kann.

Die Lösung dieser Aufgabe gelingt mit dem mehrteiligen Bauteil gemäß Anspruch 1. Bevorzugte Ausführungsformen sind in den Unteransprüchen beschrieben.

Die Erfindung betrifft also ein mehrteiliges Bauteil, in dem wenigstens eines der Teilstücke ein flächiges Abschirmteil zum Abschirmen eines Gegenstandes gegen Temperatur und/oder Schall ist. Es ist mit wenigstens einem anderen Teilstück dadurch verbunden, dass in einem ersten der Teilstücke wenigstens eine Lasche ausgebildet ist, die an einer Seite mit diesem Teilstück verbunden ist und mit ihrem freiem Ende über eine der Oberflächen des ersten Teilstücks in Richtung auf das zweite Teilstück vorsteht. Die Lasche ist dabei so ausgebildet, dass sie auf einer der Oberflächen des zweiten Teilstücks zu liegen kommt, während die dem freien Ende der Lasche seitlich benachbarten Bereiche des ersten Teilstücks auf der gegenüberliegenden Oberfläche des zweiten Teilstücks zu liegen kommen, so dass das zweite Teilstück zwischen Lasche und seitlich benachbarten Bereichen eingeklemmt wird.

Das zweite Teilstück wird also im ersten Teilstück, genauer gesagt zwischen Lasche und den seitlich der Lasche befindlichen Bereichen des ersten Teilstücks im Klemmsitz gehalten. Die seitlichen Bereiche können auf einer oder, bevorzugt, auf beiden Längsseiten des freien Endes der Lasche vorhanden sein und bilden mit der Lasche gabelartige Aufnahmebereiche. Zur Befestigung der beiden Teilstücke aneinander werden keine weiteren Befestigungsmittel benötigt. Von den Teilstücken getrennte Verbindungsklammern oder ähnliches müssen also nicht verwendet werden. Sie können allerdings, falls gewünscht, ergänzend verwendet werden, um die Steckverbindung zusätzlich zu verstärken. Ebenso ist es möglich, die Steckverbindung mittels aus dem Stand der Technik bekannten Verbindungsmethoden zu verstärken, d.h. beispielsweise mittels Schweißen, Löten, Nieten, Clinchen, Kleben. Die Teilstücke können zudem bereits vor der Montage miteinander verbunden werden, was den Einbau, beispielsweise im Bereich eines Verbrennungsmotors, erheblich erleichtert. Dies schließt allerdings nicht aus, dass das erfindungsgemäße mehrteilige Bauteil in an sich bekannter Weise derart eingebaut wird, dass die Teilstücke durch das Befestigungsmittel zusätzlich miteinander verbunden werden, sie also beispielsweise mittels einer gemeinsamen Schraubverbindung befestigt werden. Andererseits ist die Befestigung der Teilstücke aneinander sehr leicht möglich. Das Zusammenstecken kann daher ohne Weiteres erst unmittelbar vor der Endmontage vorgenommen werden, was bedeutet, dass nicht das sperrigere fertige Bauteil, sondern die leichter zu transportierenden Einzelteile ausgeliefert werden können. Ebenso ist es möglich, die Teilstücke erst bei der Endmontage zusammenzustecken, beispielsweise, wenn die Teilstücke ein dazwischen liegendes Teil von einander entgegen gesetzten Seiten umgreifen und einschließen.

Die beiden Teilstücke des mehrteiligen Bauteils werden bevorzugt formschlüssig miteinander verbunden. Zweckmäßig überlappen dabei erstes und zweites Teilstück im gesamten Grenzbereich und liegen dort unmittelbar formschlüssig aneinander an. Dies hat den Vorteil, dass Fertigungstoleranzen im Zuschnitt der Teile durch die Überlappung ausgeglichen werden können.

Erfindungsgemäß weist das mehrteilige Bauteil als eines der Teilstücke ein flächiges Abschirmteil zum Abschirmen eines Gegenstandes gegen Temperatur und/oder Schall auf. Bei diesem Teilstück kann es sich um einen Teilbereich eines Hitzeschildes handeln, welcher mit einem oder mehreren anderen Teilbereichen des Hitzeschildes oder sonstigen Bauteilen verbunden ist. Das Teilstück kann jedoch auch ein Hitzeschild insgesamt sein, welcher mit einem anderen Bauteil, das nicht zum Hitzeschild selbst gehört, sondern mit diesem verbunden werden soll, erfindungsgemäß mittels Lasche(n) formschlüssig zusammengesteckt wird. Bei diesem an dem Hitzeschild zu befestigenden Teilstück kann es sich beispielsweise um einen weiteren Hitzeschild zur Abschirmung eines anderen Gegenstandes handeln oder um ein sonstiges Anbauteil wie beispielsweise einen Anbaustutzen zur Befestigung eines anderen Bauteils am Hitzeschild, eine Halterung für den Hitzeschild usw. Durch die Befestigung mittels Laschen-Steckverbindung lassen sich auf einfache Art und Weise ohne zusätzliche Befestigungsmittel auch sehr komplexe dreidimensionale Strukturen erzeugen, die sich in einem einstückigen Bauteil nicht verwirklichen lassen. Die Anzahl, Form und Größe der Teilstücke ist dabei grundsätzlich beliebig. Bei mehr als zwei Teilstücken können lediglich zwei derselben mittels Laschen-Steckverbindung befestigt sein oder mehr als zwei. Die einfache Bauweise des erfindungsgemäßen mehrteiligen Bauteils legt es nahe, komplexe Hitzeschilde in modularer Bauweise zu fertigen. Beispielsweise wird ein Teilstück - bevorzugt ein solches ohne komplexe dreidimensionale Geometrie - so hergestellt, dass es für verschiedene Hitzeschilde zu verwenden ist, und wird dann mit typenspezifischen weiteren Teilstücken zu einem erfindungsgemäßen mehrteiligen Bauteil zusammengesteckt.

Bei der Verbindung der Teilstücke zum erfindungsgemäßen mehrteiligen Bauteil kommt es nicht darauf an, an welchem der Teilstücke die wenigstens eine Lasche zur Herstellung der Steckverbindung vorhanden ist. Die wenigstens eine Lasche kann entweder am Abschirmteil oder an einem anderen Teilstück ausgebildet sein. Es ist ebenfalls möglich, Laschen sowohl am Abschirmteil als auch an dem mit dem Abschirmteil zu verbindenden Teilstück vorzusehen. Entsprechend befindet sich am jeweils anderen Teilstück ein komplementärer Aufnahmebereich, welcher zwischen der Lasche und den dem freien Ende der Lasche seitlich benachbarten Bereichen - bzw. im Falle einer Lasche an einem Eck eines Teilstücks des einen seitlich benachbarten Bereichs - eingeklemmt wird. Die wenigstens eine Lasche kann entweder im Außenrandbereich des ersten Teilstücks oder im Innenbereich des ersten Teilstücks vorgesehen sein. Auch Kombinationen beider Varianten sind denkbar. Befindet sich die wenigstens eine Lasche im Außenrandbereich des ersten Teilstücks, wird sie zweckmäßig dadurch erzeugt, dass vom Außenrand des ersten Teilstücks nach innen verlaufend zwei Einschnitte oder Ausnehmungen vorgesehen sind, welche die Lasche seitlich begrenzen. Das stirnseitige freie Ende der Lasche entspricht demnach einem Außenrandabschnitt des ersten Teilstücks. Eine solche im Außenrandbereich des ersten Teilstücks befindliche Lasche eignet sich besonders gut, einen Außenrandabschnitt des zweiten Teilstücks im Klemmsitz zu halten. Manchmal ist aber auch ein seitliches freies Ende der Lasche von seiner Lage her prädestiniert, den entsprechenden Außenrandabschnitt des zweiten Teilstücks im Klemmsitz zu halten.

Alternativ oder ergänzend kann die Lasche aber auch im Innenbereich des ersten Teilstücks ausgebildet sein. Hierzu muss die Lasche dann auch im stirnseitigen Endbereich des freien Endes aus dem ersten Teilstück freigetrennt werden, so dass sie lediglich noch an einer Seite mit dem Teilstück verbunden ist. Auch in diesem Fall kann die Lasche dazu verwendet werden, einen Außenrandbereich des zweiten Teilstücks einzuklemmen. Bevorzugt ist es in diesem Fall jedoch, dass die Lasche durch eine Durchgangsöffnung im zweiten Teilstück hindurch gesteckt wird, um so die Steckverbindung auszubilden. Eine Durchgangsöffnung im zweiten Teilstück kann selbstverständlich auch zur Befestigung einer Lasche verwendet werden, die in einem Außenrandbereich des ersten Teilstücks ausgebildet ist. Besonders bevorzugt ist es bei der Verwendung einer Durchgangsöffnung zur Aufnahme der Lasche, die Durchgangsöffnung so groß auszubilden, dass sie die durchgesteckte Lasche seitlich im Wesentlichen passgenau begrenzt. In diesem Fall kann die Durchgangsöffnung auch zur Zentrierung von erstem und zweitem Teilstück zueinander dienen.

Unter Befestigung der Lasche in einer Durchgangsöffnung soll auch ein Fall verstanden werden, in dem die Lasche durch einen auf einer der Oberflächen des zweiten Teilstücks vorstehenden Steg hindurchgeführt ist. In diesen Fällen liegt die Lasche ebenfalls mit einem Abschnitt an einer der Oberflächen des zweiten Teilstücks an und mit einem anderen Abschnitt an dessen gegenüberliegender Oberfläche. Der Steg kann lediglich an einem Ende am Teilstück befestigt sein, bevorzugt ist er jedoch brückenartig ausgebildet und hängt mit beiden seitlichen Enden am zweiten Teilstück fest.

Um das zweite Teilstück sicher zwischen Lasche und den seitlich dem freien Ende der Lasche benachbarten Bereichen einklemmen zu können, ist die Lasche zweckmäßig nur so weit über eine Oberfläche des ersten Teilstücks herausgeformt, dass das zweite Teilstück mit seinem Aufnahmebereich gerade soeben unter Spannung in dem gebildeten Zwischenraum aufgenommen werden kann. Bevorzugt ist das freie Ende der Lasche dabei so geformt, dass es im Wesentlichen parallel zur eingeklemmten Oberfläche des zweiten Teilstücks verläuft. Außerdem kann es vorteilhaft sein, wenn zusätzliche Maßnahmen zur Erhöhung der Klemmspannung und zur sicheren Befestigung von erstem und zweitem Teilstück aneinander getroffen werden. Eine erste Möglichkeit besteht beispielsweise darin, im Bereich der Laschenverbindung eine Rastvorrichtung zur Ausbildung einer Rastverbindung zwischen erstem und zweitem Teilstück vorzusehen. Hierzu sind in an sich bekannter Weise ein Rastvorsprung und eine zugehörige Rastvertiefung vorgesehen. Dabei ist es prinzipiell gleichgültig, ob sich der Rastvorsprung im ersten oder im zweiten Teilstück befindet und umgekehrt die Rastvertiefung im zweiten oder im ersten Teilstück. Im ersten Teilstück kann die Rastverbindung entweder in einem oder beiden der Lasche seitlich benachbarten Bereiche und/oder auf der Lasche selbst vorgesehen sein. Letzteres ist bevorzugt, da die Lasche aufgrund ihrer Formgebung bereits von sich aus gewisse federnde Eigenschaften aufweisen wird, welche das Ausbilden der Rastverbindung erleichtern.

Die Klemmspannung kann zudem dadurch erhöht werden, dass die Lasche mit wenigstens einem elastischen Element versehen wird. Besonders geeignet sind hier Sicken, welche die Klemmspannung erhöhen, mit welchem die Lasche an das zweite Teilstück gepresst wird. Alternativ sind auch kompaktere Geometrien möglich, z.B. runde oder ovale Erhebungen mit planer oder gewölbter Oberfläche. Es können auch mehrere elastische Elemente in Längsrichtung gesehen hintereinander auf der Lasche angebracht sein. Ein Vorteil einer solchen Ausbildung liegt in einer Erhöhung der Flexibilität der Lasche, die eine bessere Anpassung an das andere Teilstück erlaubt und auf das mehrteilige Bauteil einwirkende Bewegungen ausgleichen kann. Zudem kann sich durch die Ausbildung der Laschen auch eine Topographie ergeben. Beispielsweise kann sich die Höhe der elastischen Elemente in Längsrichtung der Lasche ändern. Sinnvoll kann es beispielsweise sein, die Höhe einer Sicke oder eines anderen elastischen Elements in Richtung zum freien Ende hin zu vergrößern, um über die gesamte Laschenlänge eine hohe Klemmspannung aufrecht zu erhalten. Falls gewünscht, kann das elastische Element gleichzeitig auch als Rastvorsprung zur Ausbildung der vorstehend erwähnten Rastverbindung dienen. Als Rastvertiefung kann beispielsweise eine Vertiefung oder Ausnehmung im zweiten Teilstück dienen oder ein Bereich hinter einer Aufwölbung, zum Beispiel in Form einer Sicke, hinter der der Rastvorsprung des ersten Teilstücks einrastet. Grundsätzlich ist es auch möglich, das elastische Element ausschließlich im zweiten Teilstück vorzusehen und nicht auf der Lasche. Dies ist derzeit aber nicht bevorzugt, da es einfacher ist, eine Sicke oder eine sonstige Erhebung als elastisches Element gleichzeitig mit dem Herausprägen der Lasche aus der Ebene des ersten Teilstücks in diese einzuprägen.

Um das passgenaue Zusammenfügen der Teilstücke zu vereinfachen, ist im Bereich der Steckverbindung zweckmäßig wenigstens eine Zentriervorrichtung vorgesehen. Vorzugsweise sind pro Paar zusammengefügter Teilstücke mehrere Zentriervorrichtungen vorhanden, was entweder durch jeweils eine Zentriervorrichtung im Bereich einer von insgesamt mehreren Laschen oder mehrere Zentriervorrichtungen pro Laschen-Steckverbindung realisiert werden kann. Die Zentriervorrichtung kann in an sich bekannter Weise durch komplementäre Führungselemente in erstem und zweiten Teilstück verwirklicht werden. Auf die Möglichkeit der passgenauen Ausbildung von Lasche im ersten Teilstück und Durchgangsöffnung im zweiten Teilstück wurde bereits hingewiesen. Auch die erwähnten Rastverbindungen können so ausgebildet werden, dass sie gleichzeitig als Zentriervorrichtung dienen. Ebenfalls können die elastischen Elemente so ausgebildet sein, dass sie die Teilstücke passend zueinander ausrichten. Beispielsweise kann eine Versteifungssicke längs über die Lasche verlaufen, welche beim Zusammenfügen der Teilstücke auf eine komplementäre Sicke im zweiten Teilstück aufgeschoben wird. Auch die Außenkontur der Lasche selbst kann als Führungselement benutzt werden, beispielsweise indem ein Längskantenabschnitt der Lasche nach dem Zusammenstecken an einem komplementären Außenrandabschnitt des zweiten Teilstücks zu liegen kommt.

Anzahl, Form und Größe (Länge, Breite, Dicke) der Laschen können grundsätzlich beliebig und beispielsweise entsprechend den Anforderungen an die Stabilität der Verbindung gewählt werden. Bevorzugt werden 1 bis 15 Laschen, insbesondere 1 bis 5 Laschen, für die Verbindung zweier Teilstücke verwendet. In den einfachsten Ausführungen ist die Lasche rechteckig oder zungenförmig. Es können jedoch auch kompliziertere Formen gewählt werden, wenn die Lasche beispielsweise Zentrierfunktion übernehmen oder ein zu leichtes Auseinanderrutschen der Teilstücke vermieden werden soll. Die Ausbildung spezieller Außenkonturen, Vorsprünge und elastischer Elemente auf den Oberflächen wurde bereits genannt. Die diversen Laschen an einem Teilstück können dabei sehr unterschiedlich gestaltet sein. Die Laschen werden meist nur leicht verformt, um den erforderlichen Zwischenraum zum Einstecken des anderen Teilstücks vorzuhalten. Bei starker dreidimensionaler Verformung der Teilstücke können die Laschen jedoch auch stark aus ihrer ursprünglichen Ebene herausgeformt sein, um ein Zusammenstecken mit einem gekrümmten komplementären Teilstück zu erleichtern. Dabei kann die Biegung verschiedener aufeinander folgender Laschen beispielsweise an einer Außenkante entlang dieser Kante ebenso - in Abhängigkeit von der Krümmung des komplementären Teilstücks - variieren wie die bereits angesprochenen Eigenschaften Form, Länge, Breite und Dicke der Laschen. Möglich ist es ebenfalls, im Bereich der Lasche einen oder mehrere Abschnitte vorzusehen, die nach dem Zusammenstecken der Teilstücke verformt werden. Eine solche Ausgestaltung dient hauptsächlich dem Zweck, ein Auseinanderrutschen der Teilstücke zu verhindern. Verformbare Abschnitte können beispielsweise im stirnseitigen Endbereich des freien Endes der Lasche vorgesehen sein. In einer bevorzugten Variante der Erfindung werden sie mit dem freien Ende der Lasche durch eine Durchgangsöffnung im zweiten Teilstück durchgesteckt und anschließend umgebogen, sodass sie seitlich über die Durchgangsöffnung herausragen und nicht mehr durch diese zurückgezogen werden können. Eine ähnliche Wirkung könnte auch durch Verstemmen der Randabschnitte der Lasche erreicht werden.

Zur Befestigung der Lasche des ersten Teilstücks am zweiten Teilstück können nicht nur ein Randabschnitt oder eine Öffnung des zweiten Teilstücks dienen, sondern es kann auch eine Lasche verwendet werden, die grundsätzlich in gleicher Weise wie diejenige im ersten Teilstück ausgebildet sein kann. Beispielsweise können zwei mit ihren stirnseitigen freien Enden gegeneinander weisende Laschen hintereinander geschoben werden. Alternativ oder zusätzlich können gegenläufige Laschen ineinander gesteckt werden. Gegenläufig bedeutet, dass die Laschen im Wesentlichen U- oder V-förmig gebogen sind und die stirnseitigen Enden der Laschen voneinander weg weisen. Falls gewünscht, können die Laschen nach dem Zusammenstecken zusätzlich durch Verformung miteinander verkrallt werden. Außerdem können eine oder beide der zusammengesteckten Laschen verformbare Abschnitte aufweisen, die wie beschrieben nach Umbiegen die Laschen aneinander befestigen. Die Laschen können im Randbereich des ersten oder zweiten Teilstücks und/oder in deren Innenbereich angebracht sein.

Die freien Enden der Laschen können zusätzlich zum Einklemmen eines anderen Teilstücks auch zur Befestigung weiterer Elemente dienen. Bei hinreichender Länge können sie beispielsweise als Kabelführung verwendet werden. Außerdem können sie zur Aufnahme einer Schraubverbindung oder ähnlicher Befestigungsmittel dienen, um weitere Bauteile mit der Lasche zu verbinden.

Meist wird nur ein weiteres Teilstück mit einer bestimmten Lasche umgriffen. Es ist jedoch auch möglich, mehrere, insbesondere zwei Teilstücke zwischen eine Lasche und ihre benachbarten Bereiche einzustecken, wobei die genannten beiden Teilstücke im Bereich der Lasche unmittelbar übereinander liegen. Hierbei ist es zur Erhöhung der Stabilität bevorzugt, wenn die beiden genannten Teilstücke mittels der vorgenannten elastischen Elemente zusätzlich aufeinander fixiert sind.

Um das Zusammenfügen der Teilstücke zu erleichtern und nach dem Einbau des mehrteiligen Bauteils Friktionen zwischen ihnen zu vermeiden, kann zumindest im Verbindungsbereich zwischen den Teilstücken ein Gleitelement vorgesehen sein. Beispielsweise kann es sich um eine an sich bekannte Gleitbeschichtung auf einem oder beiden der verbundenen Teilstücke handeln. Zusätzlich oder alternativ kann ein Dämpfungselement im beschriebenen Bereich eingefügt werden, um die Bewegung der Teilstücke gegeneinander aufzufangen. Geeignete Dämpfungselemente sind elastomere Puffer aus Kunststoff, Federelemente aus Metall oder sonstigen geeigneten Materialien. Auch eine Gleitbeschichtung kann zusätzlich Dämpfungsfunktion übernehmen. In ähnlicher Weise können auch - ebenfalls zusätzlich oder alternativ - Abdichtelemente, etwa in Form von temperaturbeständigen Schnüren, Raupen oder Bändern eingefügt werden.

Die Teilstücke, die mittels Laschen-Steckverbindung verbunden sind, können aus jedem beliebigen Material bestehen. Auch unterschiedliche Materialien wie Metall, Kunststoff, Fasermaterialien usw. können kombiniert werden. Das Teilstück, das zum Abschirmen gegen Hitze und/oder Schall dient, besteht zweckmäßig aus den bereits bisher für Hitzeschilde verwendeten Materialien. Häufig sind dies einzelne Metalllagen oder Mehrschichtmaterialien mit zwei metallischen Decklagen und gegebenenfalls einer zwischen diesen eingebetteten Isolationsschicht. Diese Isolationsschicht wird zweckmäßig dort ausgespart, wo im Hitzeschild eine Befestigungslasche ausgebildet werden soll. Die Lasche wird also bevorzugt aus einer oder beiden der metallischen Decklagen gebildet. Die Herstellung der wenigstens einen Lasche kann dabei auf einfache Weise in die üblichen Herstellungsschritte integriert werden. Das Freistanzen der Lasche erfolgt beispielsweise gleichzeitig mit dem Einstanzen von Öffnungen in eine Hitzeschild-Vorform und/oder mit dem Freistanzen der Vorform. Das Herausformen der Lasche und gegebenenfalls das Einprägen von elastischen Elementen, Rastvorsprüngen etc. kann gleichzeitig mit dem Herausprägen der dreidimensionalen Struktur aus dem planen Ausgangsmaterial erfolgen.

Auch im Aufnahmebereich des zweiten Teilstücks kann die gegebenenfalls vorhandene, insbesondere partikelförmige Isolationsschicht partiell ausgespart werden. Dies geschieht zweckmäßig derart, dass ein Bereich zwischen den metallischen Deckschichten von der Isolationsschicht befreit wird, der groß genug ist, die Lasche des ersten Teilstücks aufzunehmen. Die Lasche wird also zwischen die Deckschichten eingeschoben, während die dem freien Ende der Lasche benachbarten seitlichen Bereiche auf der anderen Seite einer der Deckschichten zu liegen kommen, sodass eine der Deckschichten zwischen Lasche und seitlichen Bereichen eingeklemmt wird.

Die Erfindung soll nachfolgend anhand einer Zeichnung beschrieben werden. Die nachfolgenden Figuren, in denen gleiche Bezugszeichen gleiche Teile bezeichnen, sind jedoch rein schematisch und dienen ausschließlich der Illustration einiger bevorzugter Beispiele, ohne dass die Erfindung auf diese beschränkt wäre. In den Figuren zeigen:
- Fig. 1: eine Teildraufsicht auf ein erstes Ausführungsbeispiel eines erfindungsgemäßen mehrteiligen Bauteils am Beispiel eines Hitzeschildes in nicht zusammengebautem und zusammengesetztem Zustand;
- Fig. 2 bis 10: Teildraufsichten auf weitere Ausführungsbeispiel eines erfindungsgemäßen mehrteiligen Bauteils am Beispiel eines Hitzeschildes in nicht zusammengebautem und zusammengesetztem Zustand und
- Fig. 11: eine perspektivische Ansicht eines erfindungsgemäßen mehrteiligen Bauteils am Beispiel eines Hitzeschildes.

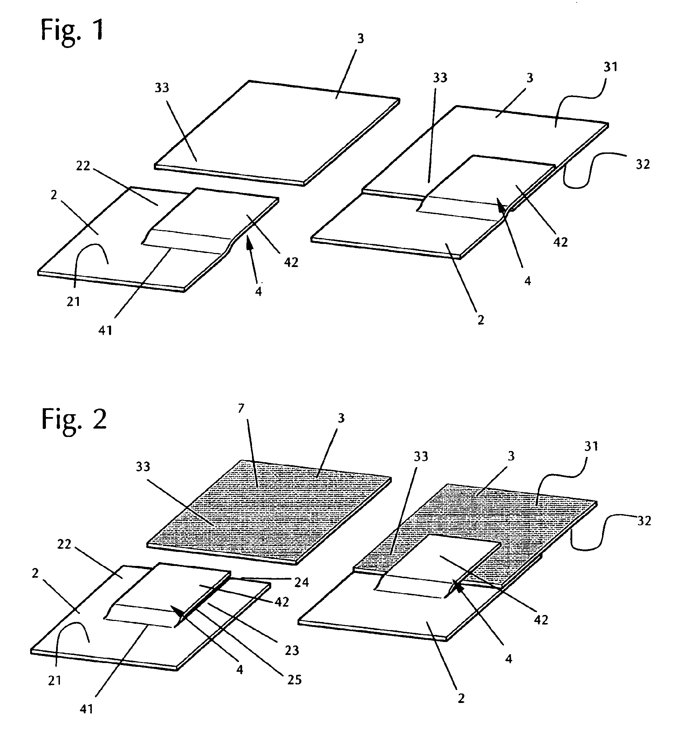

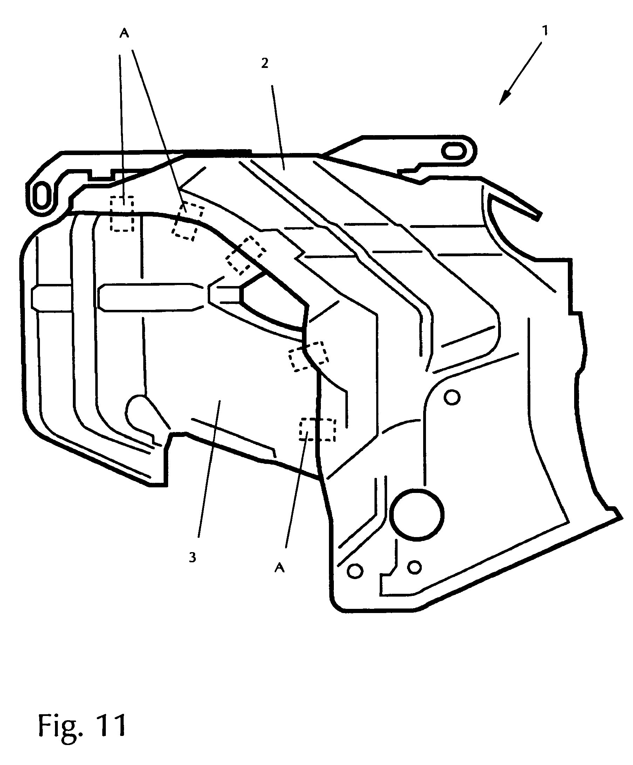

Figuren 1 bis 10 zeigen Ausschnitte eines erfindungsgemäßen mehrteiligen Bauteils, nämlich konkret eines Hitzeschildes zum Einbau im Motorraum eines Kraftfahrzeuges, wie er beispielhaft in Fig. 11 dargestellt ist. Der Hitzeschild 1 ist aus mehreren Teilstücken 2 und 3 zusammengesetzt, von denen Teilstück 3 einen in der Zeichnung vorderen linken Bereich des bogenförmigen Teilstücks 2 abdeckt und im Wesentlichen senkrecht zu diesem steht. Die Teilstücke 2 und 3 bestehen jeweils aus einer metallischen Lage oder einer Mehrschichtstruktur, denen durch Prägen die gezeigte dreidimensionale Form verliehen wurde.

Die Teilstücke 2 und 3 sind in den mit A gekennzeichneten Bereichen durch Steckverbindungen miteinander verbunden. Diese Verbindungsbereiche sind in Figuren 2 bis 10 im Detail dargestellt.

Fig. 1 zeigt dabei eine Verbindung an einem Rand der Teilstücke 2 und 3. Die Lasche 4, die im ersten Teilstück 2 ausgebildet ist, wird an ihrem freien Ende 42 daher nur links von einem seitlichen Bereich 22 begrenzt. Die Lasche 4 ist lediglich noch an einer Seite 41 mit dem Teilstück 2 verbunden und rechteckig ausgebildet. Ihr freies Ende 42 steht über die Oberfläche 21 des Teilstücks 2 vor und verläuft, abgesehen von dem unmittelbar an die Verbindungskante 41 angrenzenden Biegebereich, im Wesentlichen parallel zur Oberfläche 21. Durch das Aufbiegen der Lasche 4 wird ein gabelförmiger Aufnahmebereich gebildet, in den ein Randbereich 33 des zweiten Teilstücks 3 eingeschoben werden kann. Der Abstand zwischen Laschenende 42 und Oberfläche 21 ist dabei so groß, dass der Randabschnitt 33 in diesem Bereich eingeklemmt und dort unter Spannung gehalten wird. Der linke Bereich der Fig. 1 zeigt den Zustand vor dem Zusammenstecken der Teilstücke 2 und 3, der rechte Bereich die zusammengefügten Teilstücke. Nach dem Zusammenfügen überlappen die Randbereiche 33 und 22 der Teilstücke. Der seitliche Bereich 22 kommt auf der Oberfläche 32 des Teilstücks 3 zu liegen, das freie Laschenende 42 dagegen auf der Oberfläche 31, sodass ein Abschnitt des Teilstücks 3 gabelförmig dazwischen eingeklemmt wird. Es ergibt sich eine formschlüssige Verbindung, die ohne zusätzliche Befestigungselemente auskommt.

Die Verbindung in Fig. 2 entspricht im Wesentlichen derjenigen der Fig. 1. Hier befindet sich die Lasche 4 jedoch zwischen zwei seitlichen Abschnitten 22 und 23 des ersten Teilstücks 2, aus dem sie durch beiderseitige, vom Außenrand 24 in das Innere führende Einschnitte 25 freigetrennt ist. Weiterhin ist die Oberfläche 33 mit einer Gleitbeschichtung 7 versehen.

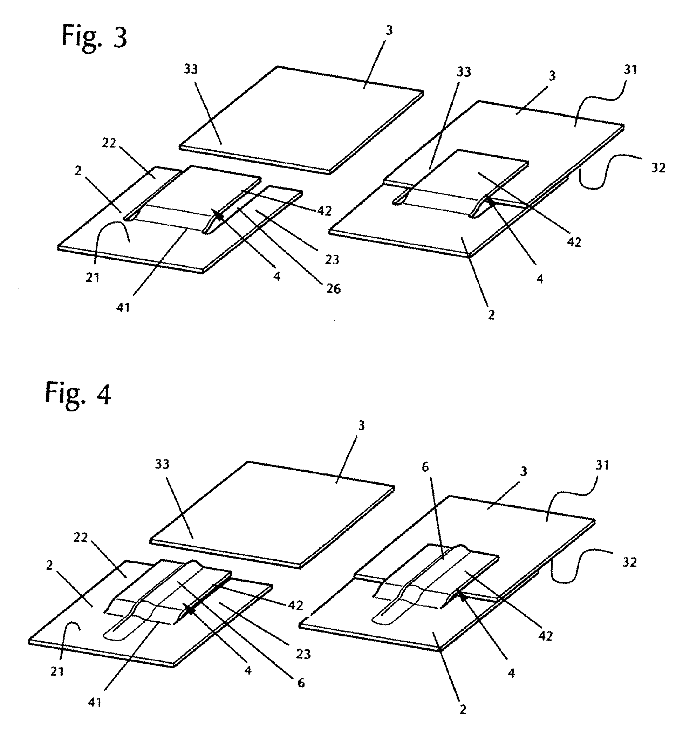

Der Unterschied zwischen den Ausführungsformen der Figuren 2 und 3 liegt in der Art der Freitrennung der Lasche 4. Anstelle der Einschnitte 25 sind in Fig. 3 Ausnehmungen 26 vorhanden, die einen seitlichen Abstand zwischen Laschenende 42 und den Abschnitten 22 und 23 schaffen. Dadurch werden Friktionen zwischen beiden Teilen beim Herausformen der Lasche 4 aus dem Teilstück 2 vermieden.

In der Ausführungsform gemäß Fig. 4 weist die Lasche 4 im Unterschied zu derjenigen der Fig. 2 eine in Längsrichtung über die Lasche 4 und einen anschließenden Bereich des Teilstücks 2 verlaufende Sicke 6 auf. Diese Sicke 6 erhöht die Stabilität der Lasche 4 und verstärkt den Anpressdruck, mit der diese am Teilstück 3 anliegt.

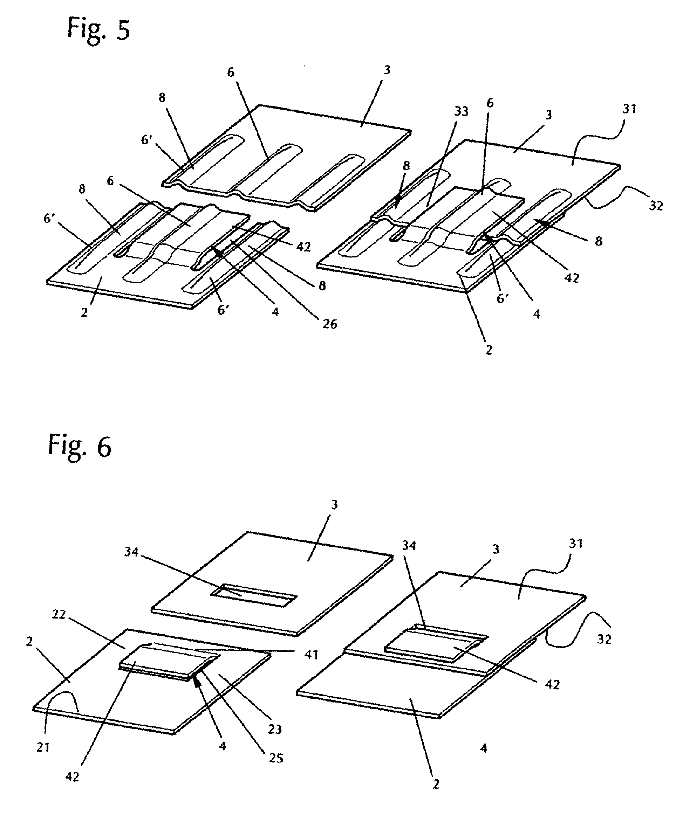

In Fig. 5 dient die Sicke 6 nicht nur der Verstärkung der Lasche 4, sondern gleichzeitig auch als Führungselement als Teil einer Zentriervorrichtung 8. Komplementär zur Sicke 6 ist eine weitere Sicke 6 in den Randbereich 33 des Teilstücks 3 eingeprägt. Außerdem sind beidseitig dieser Sicken 6 weitere derartige Sicken 6' vorhanden. Beim Ineinanderschieben der Teilstücke 2 und 3 schieben sich die zueinander gehörenden Sicken 6 (bzw. 6') aufeinander und zentrieren so die Teilstücke 2 und 3 in gewünschter Lage zueinander.

Fig. 6 zeigt eine Verbindungsart, bei der die Lasche 4 nicht mit dem freien Ende 42 zum Außenrand des Teilstücks 2 gerichtet, sondern im Inneren des Teilstücks 2 angeordnet ist und mit dem freien Ende 42 vom Außenrand des Teilstücks weg weist. Zur Aufnahme des freien Endes 42 der Lasche 4 ist im zweiten Teilstück 3 eine Durchgangsöffnung 34 vorhanden, die gerade groß genug ist, dass das freie Ende 42 hindurchgeführt werden kann. Auf diese Weise dient die Anordnung auch der seitlichen Ausrichtung der Teilstücke 2 und 3 zueinander.

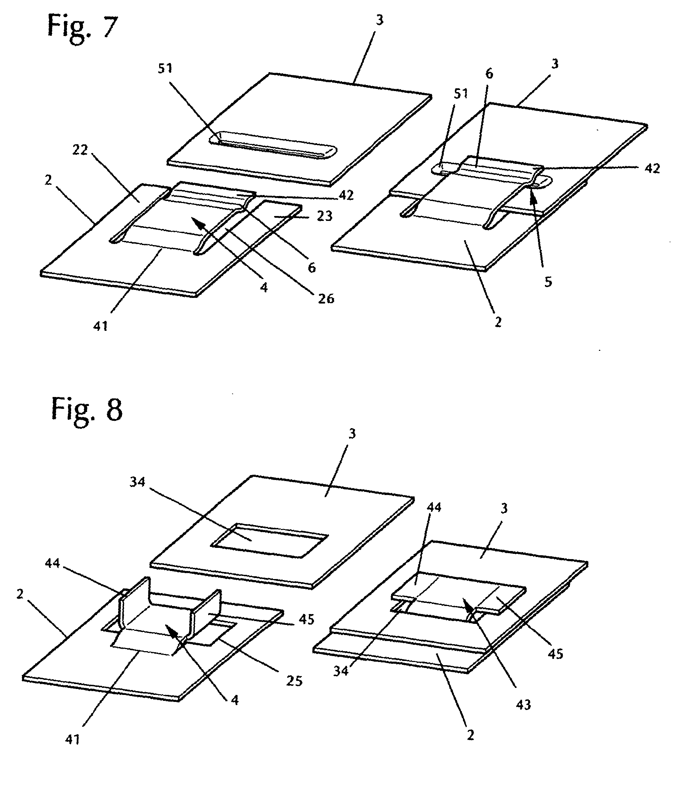

In Fig. 7 ist das freie Ende 42 der Lasche 4 erneut zum Außenrand des Teilstücks 2 gerichtet. Im Unterschied zur Ausbildung gemäß Fig. 2 ist im vorderen Bereich des freien Endes 42 eine quer über die Lasche 4 verlaufende Sicke 6 vorhanden. Diese Sicke 6 schnappt in eine parallel zum Außenrand des Teilstücks 3 verlaufende Vertiefung 51 ein und bildet mit dieser eine Rastverbindung 5 aus. Anstelle der Vertiefung 51 könnte die Rastverbindung auch eine Aussparung nutzen, wobei in diesem Fall die Sicke 6 bevorzugt einen größeren Abstand zum freien Ende 42 der Lasche 4 aufweist.

Eine besonders stabile Verbindung wird in Fig. 8 gezeigt. Die Verbindung wird dadurch erhalten, dass im stirnseitigen freien Endbereich der Lasche 4 Vorsprünge 44, 45 vorhanden sind. Im nicht zusammengebauten Zustand der Teilstücke 2 und 3 sind die Vorsprünge 44, 45 vom Teilstück 2 weg nach oben soweit aufgebogen, dass das freie Ende der Lasche 4 durch die Öffnung 34 hindurch geschoben werden kann. Anschließend wird der durchgeschobene Bereich 43 so verformt, dass er nicht wieder aus der Durchgangsöffnung 34 herausgezogen werden kann. Dies geschieht dadurch, dass die Vorsprünge 44 und 45 in Richtung auf das zweite Teilstück 3 nach unten gebogen werden, bis sie im Wesentlichen in einer Ebene mit dem restlichen feien Ende der Lasche 4 verlaufen. Während Figur 8 eine Ausführungsform zeigt, bei der das zweite Teilstück 3 keine Lasche aufweist, ist es prinzipiell auch möglich, dass der Bereich des Teilstücks 3, in dem die Durchgangsöffnung 34 ausgebildet ist sowie ein diese Durchgangsöffnung umgebender Rahmen wiederum als Lasche ausgeführt ist, die bevorzugt an zwei Seiten aus dem Teilstück 3 freigetrennt ist.

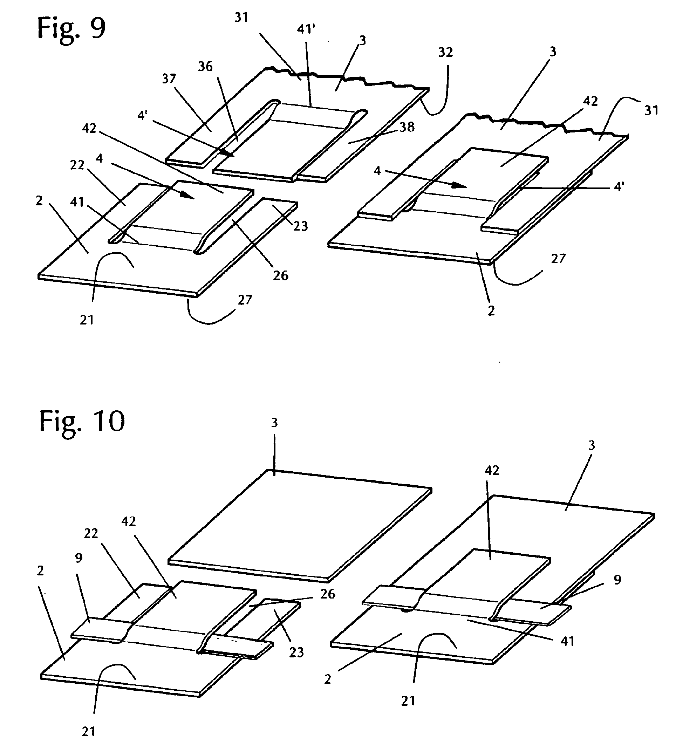

Figur 9 zeigt eine Variante der Klemmverbindung aus Figur 2, wobei beide Teilstücke 2 und 3 Laschen 4 und 4' aufweisen. Wiederum sind diese mittels Ausnehmungen 26 und 36 von ihren seitlichen Bereichen 22, 23 bzw. 37, 38 getrennt. Die Laschen 4 und 4' weisen Verbindungsbereiche 41, 41' auf, die jeweils mit einem Absatz versehen sind. Die Darstellung des zusammengefügten Bauteils zeigt, dass die Laschen 2 und 3 nicht nur einander gegenseitig übergreifen, sondern zusätzlich einen Teil der Oberflächen 31 bzw. 27 des jeweils anderen Teilstücks.

Figur 10 stellt schließlich ein Ausführungsbeispiel dar, bei dem ein Dichtungsband 9 aus einem temperaturstabilen Werkstoff, z.B. einem Faserwerkstoff, beim Zusammenfügen der beiden Teilstücke 2 und 3 dazwischen gefasst wird. Im gezeigten Beispiel liegt das flache Dichtungsband 9 zwischen der Lasche 42 und den dieser seitlich benachbarten Bereichen 22 und 23. Das Dichtband weist dabei eine Breite auf, die dazu geeignet ist, die Öffnungen der Ausnehmungen 26, die sonst nach dem Zusammenfügen der beiden Teilstücke 2 und 3 offen bleiben, abzudichten, damit kann beispielsweise ein Kamineffekt, d.h. das Aufsteigen warmer Luft vermieden werden, so dass die Abschirmfunktion auch nicht lokal unterbrochen ist.

## Patentansprüche

1. Mehrteiliges Bauteil (1), in dem wenigstens eines der Teilstücke (2, 3) ein flächiges Abschirmteil zum Abschirmen eines Gegenstandes gegen Temperatur und/oder Schall ist, welches mit wenigstens einem anderen Teilstück dadurch verbunden ist, dass in einem ersten der Teilstücke (2, 3) wenigstens eine Lasche (4) ausgebildet ist, die an einer Seite (41) mit dem Teilstück verbunden ist und mit ihrem freien Ende (42) über eine der Oberflächen (21) des ersten Teilstücks (2) in Richtung auf das zweite Teilstück (3) vorsteht, wobei die Lasche (4) auf einer Oberfläche (31) des zweiten Teilstücks und die dem freien Ende (42) der Lasche (4) seitlich benachbarten Bereiche (22, 23) des ersten Teilstücks (2) auf der gegenüberliegenden Oberfläche (32) des zweiten Teilstücks (3) zu liegen kommen und so das zweite Teilstück (3) zwischen sich einklemmen,
**dadurch gekennzeichnet,**
**dass** die Teilstücke (2, 3) dreidimensional verformt sind und die Lasche (4) mit wenigstens einem elastischen Element (6) versehen ist, um die Klemmspannung zu erhöhen, mit der die Lasche (4) an das zweite Teilstück (3) gepresst wird.

2. Mehrteiliges Bauteil gemäß Anspruch 1, worin die wenigstens eine Lasche (4) von zwei von einem Außenrand (24) des ersten Teilstücks (2) in dessen Inneres verlaufenden Einschnitten (25) oder Ausnehmungen (26) seitlich begrenzt wird.

3. Mehrteiliges Bauteil gemäß Anspruch 1, worin die wenigstens eine Lasche (4) im Inneren des ersten Teilstücks (2) ausgebildet ist.

4. Mehrteiliges Bauteil nach einem der vorhergehenden Ansprüche, worin die wenigstens eine Lasche (4) und die seitlich benachbarten Bereiche (22, 23) einen Außenrandbereich (33) des zweiten Teilstücks (3) zwischen sich einklemmen.

5. Mehrteiliges Bauteil nach einem der Ansprüche 1 bis 3, worin im zweiten Teilstück (3) eine Durchgangsöffnung (34) zum Durchstecken der Lasche (4) ausgebildet ist.

6. Mehrteiliges Bauteil nach Anspruch 5, worin ein durch die Durchgangsöffnung (34) gesteckter Bereich (43) der Lasche (4) verformt ist, um das Herausrutschen der Lasche (4) aus der Durchgangsöffnung (34) zu verhindern.

7. Mehrteiliges Bauteil nach einem der vorhergehenden Ansprüche, worin im Bereich der Lasche (4) eine Rastvorrichtung zur Ausbildung einer Rastverbindung (5) zwischen erstem und zweiten Teilstück (2, 3) vorgesehen ist.

8. Mehrteiliges Bauteil nach einem der vorhergehenden Ansprüche, worin im Bereich der Lasche (4) und/oder der seitlich benachbarten Bereiche (22, 23) wenigstens eine Zentriervorrichtung (8) zur Ausrichtung der Teilstücke (2, 3) in einer gewünschten Lage zueinander vorgesehen ist.

9. Mehrteiliges Bauteil nach einem der vorhergehenden Ansprüche, worin das elastische Element (6) eine Sicke ist.

10. Mehrteiliges Bauteil nach einem der vorhergehenden Ansprüche, worin im zweiten Teilstück (3) ebenfalls wenigstens eine Lasche (4') vorhanden ist.

11. Mehrteiliges Bauteil nach Anspruch 10, worin jeweils eine Lasche (4) des ersten Teilstücks (2) mit einer Lasche (4') des zweiten Teilstücks (3) verhakt ist.

12. Mehrteiliges Bauteil nach Anspruch 11, worin die Laschen durch Verformung miteinander verkrallt sind.

13. Mehrteiliges Bauteil nach einem der vorhergehenden Ansprüche, worin im Verbindungsbereich zwischen erstem und zweiten Teilstück (2, 3) zumindest bereichsweise ein Gleit- (7), Dichtungs- (9) und/oder Dämpfungselement eingebettet ist.

14. Mehrteiliges Bauteil nach einem der vorhergehenden Ansprüche, worin die Teilstücke (2, 3) unterschiedliche Teilbereiche eines Hitzeschildes sind.

## Claims

1. Multi-part component (1), in which at least one of the parts (2, 3) is a laminar shielding part for shielding an object from temperature and/or noise, which is joined to at least one other part in that in the first one of the parts (2, 3) at least one tab (4) is provided, which is connected on one side (41) with the part and that its free end (42) projects over one of the surfaces (21) of the first part (2) in the direction of the second part (3), with the tab (4) coming to rest on one surface (31) of the second part and the sections (22, 23) of the first part (2) laterally adjacent to the free end (42) of the tab (4) coming to rest on the opposing surface (32) of the second part (3), clamping the second part (3) between them,
**characterized in that**
the parts (2, 3) are deformed three-dimensionally and the tab (4) is provided with at least one elastic member (6) in order to increase the clamping tension with which the tab (4) is pressed onto the second part (3).

2. Multi-part component in accordance with Claim 1, wherein the at least one tab (4) is bordered by two cuts (25) or recesses (26) extending from one outer edge (24) of the first part (2) into its interior.

3. Multi-part component in accordance with Claim 1, wherein the at least one tab (4) is provided in the interior of the first part (2).

4. Multi-part component in accordance with any one of the previous claims, wherein the at least one tab (4) and the laterally adjacent sections (22, 23) clamp an outer edge section (33) of the second part (3) between them.

5. Multi-part component in accordance with any one of Claims 1 to 3, wherein a through-hole (34) is provided in the second part (3), through which the tab (4) is to be inserted.

6. Multi-part component in accordance with Claim 5, wherein the section (43) of the tab (4) inserted through the through-hole (34) is deformed in order to prevent the tab (4) from sliding out of the through-hole (34).

7. Multi-part component in accordance with any one of the previous claims, wherein provision is made for an arresting facility in the region of the tab (4) to develop a locking joint (5) between the first and second part (2, 3).

8. Multi-part component in accordance with any one of the previous claims, wherein provision is made in the area of the tab (4) and/or the laterally adjacent sections (22, 23) for at least one centering device (8) for aligning the parts (2, 3) in a desired position in relation to each other.

9. Multi-part component in accordance with any one of the previous claims, wherein the elastic member (6) is a bead.

10. Multi-part component in accordance with any one of the previous claims, wherein at least one tab (4') is also provided in the second part (3).

11. Multi-part component in accordance with Claim 10, wherein one tab (4) of the first part (2) is hooked into one tab (4') of the second part (3) in each case.

12. Multi-part component in accordance with Claim 11, wherein the tabs are interlocked by means of deformation.

13. Multi-part component in accordance with any one of the previous claims, wherein at least in sections a sliding (7), sealing (9) and/or clamping member is embedded in the joint area between the first and second part (2, 3).

14. Multi-part component in accordance with any one of the previous claims, wherein the parts (2, 3) constitute different sections of a heat shield.

## Revendications

1. Élément en plusieurs parties (1) dans lequel l'une au moins des parties (2, 3) est une partie d'isolation plane pour isoler un objet de la température et/ou du bruit, qui est reliée avec au moins une autre partie par le fait qu'est formée dans une première des parties (2, 3) au moins une patte (4) qui est reliée d'un côté (41) avec la partie et dépasse par son extrémité libre (42) au-delà d'une des surfaces (21) de la première partie (2) en direction de la deuxième partie (3), la patte (4) reposant sur une surface (31) de la deuxième partie et les parties (22, 23) de la première partie (2) voisines de l'extrémité libre (42) de la patte (4) reposant sur la surface opposée (32) de la deuxième partie (3) et serrant ainsi entre elles la deuxième partie (3),
**caractérisé en ce que**
les parties (2, 3) ont une forme tridimensionnelle et la patte (4) est munie d'au moins un élément élastique (6) pour accroître la tension de serrage avec laquelle la patte (4) est pressée sur la deuxième partie (3).

2. Élément en plusieurs parties selon la revendication 1, dans lequel l'au moins une patte (4) est délimitée latéralement par deux découpes (25) ou creux (26) partant d'un bord extérieur (24) de la première partie (2) et allant vers l'intérieur de celle-ci.

3. Élément en plusieurs parties selon la revendication 1, dans lequel l'au moins une patte (4) est formée à l'intérieur de la première partie (2).

4. Élément en plusieurs parties selon l'une des revendications précédentes, dans lequel l'au moins une patte (4) et les zones voisines latéralement (22, 23) enserrent entre elles une zone de bord extérieur (33) de la deuxième partie (3).

5. Élément en plusieurs parties selon l'une des revendications 1 à 3, dans lequel une ouverture de passage (34) est formée dans la deuxième partie (3) pour l'insertion de la patte (4).

6. Élément en plusieurs parties selon la revendication 5, dans lequel une zone (43) de la patte (4) insérée à travers l'ouverture de passage (34) est déformée pour empêcher la patte (4) de glisser hors de l'ouverture de passage (34).

7. Élément en plusieurs parties selon l'une des revendications précédentes, dans lequel est prévu dans la zone de la patte (4) un dispositif d'emboîtement destiné à former un assemblage emboîté (5) entre la première partie et la deuxième (2, 3).

8. Élément en plusieurs parties selon l'une des revendications précédentes, dans lequel est prévu dans la zone de la patte (4) et/ou les zones voisines latéralement (22, 23) au moins un dispositif de centrage (8) pour orienter les parties (2, 3) dans une position souhaitée l'une par rapport à l'autre.

9. Élément en plusieurs parties selon l'une des revendications précédentes, dans lequel l'élément élastique (6) est une moulure.

10. Élément en plusieurs parties selon l'une des revendications précédentes, dans lequel une patte (4') est également prévue dans la deuxième partie (3).

11. Élément en plusieurs parties selon la revendication 10, dans lequel une patte (4) de la première partie (2) est accrochée avec une patte (4') de la deuxième partie (3).

12. Élément en plusieurs parties selon la revendication 11, dans lequel les pattes sont engagées l'une avec l'autre par des griffes grâce à une mise en forme.

13. Élément en plusieurs parties selon l'une des revendications précédentes, dans lequel un élément de glissement (7), d'étanchéité (9) et/ou d'amortissement est inclus au moins par endroits dans la zone d'assemblage entre la première partie et la deuxième (2, 3).

14. Élément en plusieurs parties selon l'une des revendications précédentes, dans lequel les parties (2, 3) sont des zones partielles différentes d'un bouclier thermique.
